Europäisches Patentamt

European Patent Office

Office européen des brevets

(11) Veröffentlichungsnummer: **0 359 898**

**A2**

(12) ## EUROPÄISCHE PATENTANMELDUNG

(21) Anmeldenummer: 89105393.6

(22) Anmeldetag: 27.03.89

(51) Int. Cl.5: **G01F 15/06 , G01F 15/075**

(30) Priorität: 20.09.88 IT 2200688

(43) Veröffentlichungstag der Anmeldung:
28.03.90 Patentblatt 90/13

(84) Benannte Vertragsstaaten:
**AT BE CH DE ES FR GB GR IT LI LU NL SE**

(71) Anmelder: **LAMPODATA S.r.l.**
**Strada dei Mercati, 2/A**
**I-43100 Parma(IT)**

(72) Erfinder: **Greco, Gianluca**
**Via La Spezia, 4**
**I-43100 Parma(IT)**
Erfinder: **Ponzoni, Giuseppe**
**III Strada 1 Cinghio Sud**
**I-43100 Parma(IT)**
Erfinder: **Forcella, Piersandro**
**Viale M. Merisio, 18**
**I-24047 Treviglio(IT)**

(74) Vertreter: **Mayer, Hans Benno**
**de Dominicis & Mayer Piazzale Marengo 6**
**I-20121 Milano(IT)**

(54) **Gerät zum Feststellen der verteilten Menge eines Fluids.**

(57) Geraet zum Feststellen der verteilten mengen eines Fluids, wobei von einer Antriebswelle (4) eines mechanischen Zaehlers (1) eine sekundaere Ausgangswelle (8) abgeleitet wird, die mit einem optischen Zaehlgeraet (13-17) wirkverbunden ist und der Ausgang des optischen Zaehlgeraetes mit einem Interface (19) in Wirkverbindung steht, das geeignet ist, die optischen Impulse in elektrische Impulse umzuwandeln, wobei ein erster Ausgang (20) dieses Interface (19) mit einem Impulskonzentrator (21) in Wirkverbindung steht, der mit einem Anzeigedisplay (22) ausgeruestet ist und ein zweiter Ausgang (23) des Interface mit einem elektronischen Rechner (24) wirkverbunden ist, der programmierbar ist und mit einer Druckvorrichtung (26) ausgeruestet ist.

EP 0 359 898 A2

## Geraet zum Feststellen der verteilten Menge eines Fluids

Die vorstehende Erfindung betrifft ein elektronisches Geraet zum Erfassen der verteilten Mengen eines Fluids. Zur Verteilung von Heizoel, Dieselbrennstoff, Fluessiggas und anderen Fluiden, werden normalerweise Tankwagen eingesetzt, die mit einem mechanischen Zaehler ausgeruestet sind. Dieser Zaehler ist z.B. mit einer Volumensmesseinrichtung wirkverbunden, mit der die verteilten Mengen des Fluids, z.B. Fluessiggas, angezeigt werden.

Die bekannten mechanischen Zaehler dieser Art bestehen meist aus einer Anzahl von Zahnraedern, die auf mehrere Walzen einwirken, wobei die Walzen auf ihrem Umfang Ziffern aufweisen, mit denen in einem oder in mehreren Schaufenstern des Zaehlers eine Zahl gebildet wird, entsprechend der Menge des aus dem Tankwagen verteilten Fluids.

Die bekannten Zaehler, die auf mechanischer Basis arbeiten, haben den Nachteil, dass sie lediglich die Anzeige der Menge des verteilten Fluids uebernehmen koennen. Es besteht bei diesen Zaehlern nicht die Moeglichkeit, diese Daten ueber eine gewisse Entfernung zu uebertragen, z.B. in das Fuehrerhaus des Tankwagens. Ferner besteht bei den bekannten Geraeten dieser Art nicht die Moeglichkeit, sofort "vor Ort" Dokumente zu erstellen, wie z.B. Lieferscheine und/oder Rechnungen, die im Moment der Lieferung Aussage ueber die Lieferung geben.

Aufgabe der vorstehenden Erfindung ist es, die Nachteile des Standes der Technik zu vermeiden und geeignete Mittel zur Verfuegung zu stellen, mit denen auf einfache und sichere Weise eine Datenerstellung und -uebertragung moeglich ist, aufgrund der ueber einen mechanischen Zaehler Werte ueber die verteilte Menge der fluessigen oder gasfoermigen Materialien an Anzeigegeraete und Datenverarbeitungsgeraete uebertragbar sind.

Diese Aufgaben werden erfindungsgemaess dadurch erziehlt, dass von der Antriebswelle eines an sich bekannten mechanischen Zaehlers eine sekundaere Ausgangswelle abgeleitet wird, die mit einem optischen Impulsgenerator wirkverbunden ist, dass der Ausgang des Impulsgebers mit einem interface in Wirkverbindung steht, welches die optischen Impulse in elektrische Impulse umwandelt, dass ein erster Ausgang dieses Interface mit einem Impuls-Konzentrator in Wirkverbindung steht, der ein Anzeigedisplay auweist und, dass ein zweiter Ausgang der Interface ueber ein optisch leitendes Faserkabel mit einem elektronischen Rechner wirkverbunden ist, der mit einem Tastenfeld zur Programmierung und einer Druckvorrichtung ausgeruestet ist.

Mit einer derartig ausgebildeten Vorrichtung wird es in vorteilhafter Weise moeglich, die Drehbewegung des mechanischen Zaehlers zu erfassen und diese Drehbewegung in eine Anzahl optischer Impulse umzuwandeln. Diese Impulse werden im ersten Interface ausschliesslich in elektrische Signale umgewandelt,um anschliessend einem Impuls-Konzentrator zugegleitet zu werden. Dieser weist ein Anzeigedisplay (zweites Interface) auf, um anschliessend die Daten der programmierbaren Recheneinheit und der Druckvorrichtung zuzuleiten. Dies ermoeglich, nach Verteilung des Fluids, die angefallenen Daten sofort zu verarbeiten und sofort Lieferscheine oder Rechnungen in Abhaengigkeit von den verteilten Mengen des Fluids zu erstellen.

Der Gegenstand der vorstehenden Erfindung wird nun genauer beschrieben und anhand eines Ausfuehrungsbeispieles in den beigefuegten Zeichnungen dargestellt.

Es zeigen:

Fig. 1 schematisch einen bekannten Zaehler mit einem mechanischen Zaehlwerk, das mit einer weiteren Ausgangswelle zur Erzeugung einer Drehbewegung ausgeruestet ist;

Fig. 2 schematisch die einzelnen Vorrichtungen, die das erfindungsgemaesse Geraet kennzeichnen.

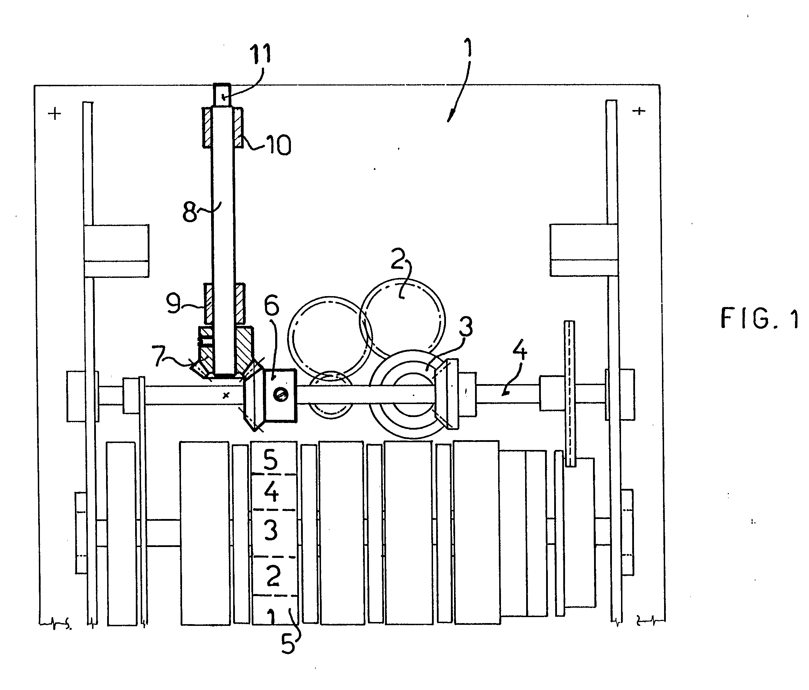

Wie der Fig. 1 zu entnehmen ist, weist ein herkoemmlicher Zaehler 1 zur Messung der verteilten Menge eines Fluids eine Anzahl Zahnraeder 2 auf, die ueber ein Kegelrad 3 die Drehbewegung einer Hauptantriebswelle zuleiten. Die Hauptantriebswelle wirkt in bekannter Weise auf eine Anzahl von Scheiben 5 ein. Die Scheiben 5 weisen in bekannter Weise auf ihrem Umfang die Ziffern 0 bis 9 auf, mit denen es moeglich ist, Zahlenkombinationen zu erstellen, die die Gesamtmenge des verteilten Fluids anzeigen. Die Drehbewegung wird den Zahnraedern 2, 3, 4 ueber eine bekannte Volumensmesseinrichtung uebertragen.

Erfindungsgemaess wird nun vorgeschlagen, auf der Antriebswelle 4 der Messvorrichtung 1 ein weiteres Zahnrad 6 vorzusehen, in vorteilhafter Weise ein Kegelzahnrad, das mit einem zweiten Kegelzahnrad 7 in Wirkverbindung steht, welches mit einer Welle 8 wirkverbunden ist, die drehbar im Inneren der Messvorrichtung 1, unter Zuhilfenahme von Lagern, z.B. Gleitbuechsen 9 und 10, gelagert ist.

Mit dieser Weiterbildung des Geraetes, durch Hinzufuegen einer weiteren Abtriebswelle 8, wird eine Ableitung 11 der Drehbewegung gebildet, mit der es moeglich ist, die Drehbewegung vom Messgeraet 1 nach aussen hin abzuleiten. Diese zusaetzliche Drehbewegung ist direkt abhaengig von der Drehbewegung der Hauptwelle 4.

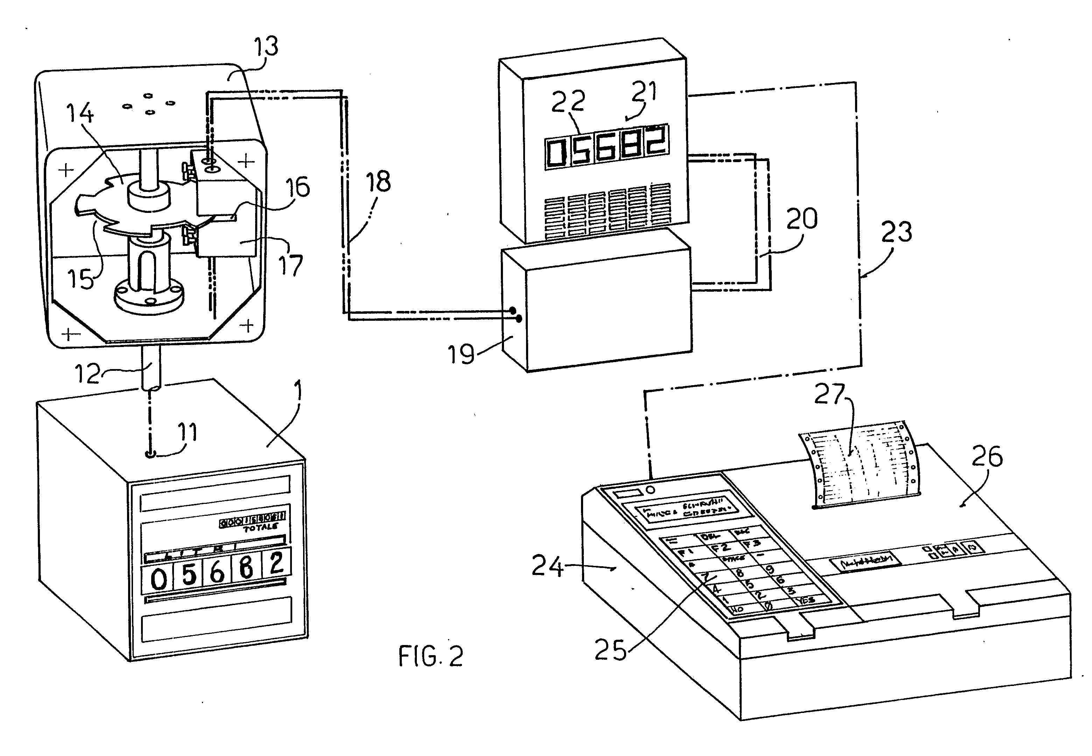

Wie der Fig. 2 zu entnehmen ist, ist das Ende 11 der Welle 8 (z.B. unter Verwendung einer elastischen, nicht dargestellten Kupplung) mit einer Welle 12 wirkverbunden, die Bestandteil eines optischen Impulsgenerators ist, der gesamthaft mit 13 gekennzeichnet ist. Dieser optische Impulsgenerator 13 ist an sich vom Stand der Technik her bekannt und besteht aus einer Scheibe 14, die an ihrem Umfang Einschnitte oder Ausnehmungen 15 aufweist. Diese Scheibe 14 ist fest auf der Welle 12 montiert. Die Scheibe 14 bewegt sich in einem Schlitz 16 einer bekannten optischen Vorrichtung 17, in der in Zeitintervallen (Ausnehmungen 15) Lichtstrahlen freigegeben werden, die unter Zuhilfenahme von geeigneten Uebertragungskabeln, in vorteilhafter Weise optisch leitenden Faserkabeln 18, an ein Interface 19 uebertragen werden. Das Geraet zur Bildung der Lichtstrahlen, die im Inneren der Vorrichtung 17 erfolgt, ist bekannt und muss nicht weiter beschrieben werden.

Mit Hilfe der Scheibe 14, die mit Schlitzen oder Ausnehmungen 15 versehen ist, wird es moeglich, die Lichtsignale zu unterbrechen bzw. diese zu uebertragen, um diese ueber die Leitung 18 zum Interface 19 zu senden. Im Interface werden die ueber die Leitungen 18 pro Zeiteinheit uebertragenen optischen Signale gespeichert. Die Lichtsignale sind direkt proportional zur Drehzahl der Hauptwelle 4 der Vorrichtung 1, daher sind diese Lichtsignale auch proportional zur Menge des verteilten Fluids.

Durch das Interface 19 werden die optischen Impulse in elektrische Impulse umgewandelt und ueber Leitungen 20 an eine Konzentrationseinheit fuer die elektrischen Impulse 21 uebertragen. Die Konzentrationseinheit 21 weist ein Display 22 auf, an dem die Menge des verteilten Fluids aufgezeigt wird.

Das Interface 21 uebertraegt mittels einem zweiten Ausgang und ueber die Leitung 23 die Signale an die Recheneinheit 24.

Die Einheit 24 besteht aus einem elektronischen Rechner, der z.B. tragbar ausgefuehrt ist. Der Rechner 24 ist programmierbar und weist ein Tastenfeld 25 zur Eingabe von zusaetzlichen Daten und Rechenbefehlen auf. Unter Zuhilfenahme von gespeicherten Programmen sowie eventuellen Zusatzdaten, die ueber das Tastenfeld 25 eingegeben werden, verarbeitet der Rechner 24 die Impulse, die ihm ueber die Einheit 13 zugeleitet wurden und diese Daten werden an einen Druck 26 uebertragen, der am Ende der Verteilung des Fluids ein gedrucktes Dokument 27 erstellt, z.B. einen Lieferschein, einen Steuerbeleg oder eine Rechnung.

Waehrend der Zaehler mit dem mechanischen Zaelwerk 1 und dem Generator 13, 16, 17 zur Erstellung der optischen Impulse in vorteilhafter Weise in unmittelbarer Naehe von der Abgabestelle des Fluids (Pumpe) des Tankwagens angeordnet sind, sind das Interface 19, die Konzentrationseinrichtung 21 der Impulse und das Anzeigedisplay 22 sowie der Rechner 24 mit der zugeordneten Druckvorrichtung 26 in vorteilhafterweise (geschuetzt gegen ungewollte aeussere Einfluesse oder ungewolltes Einwirken) im Inneren des Fahrerhauses des Fahrzeuges angeordnet.

Der Vorteil, der mit der erfindungsgemaessen Einrichtung erzielt wird, besteht darin, dass direkt an einem Tankwagen fuer die Verteilung eines Fluids, wie z.B. Dieselkraftstoff, Heizoel, Benzin oder Fluessiggas, mechanische Signale, die im Inneren der mechanischen Messeinrichtung erstellt werden, in Lichtsignale umgewandelt werden, die ueber eine gewisse Entfernung mittels eines Kabels, z.B. eines optischen Faserkabels und unter spaeteren Umwandlung in elektrische Signale (unter Wahrung groestmoeglicher Sicherheit, da keine elektrischen Geraete mit dem Fluid in Kontakt stehen) uebertragen.

Durch Verwendung der vorgeschlagenen elektronischen Einrichtungen wird es moeglich, die anfallenden Lieferdaten sofort zu verarbeiten und Schriftstuecke fuer die Berechnung der verteilten Fluidmenge zu erstellen, wodurch eine Erfassung sowie ein Ausfuellen dieser Unterlagen von Hand (wie dies bisher ueblich war) entfaellt.

## Ansprüche

1. Geraet zum Feststellen der verteilten Mengen eines Fluids, mit einer mechanischen Messvorrichtung, **dadurch gekennzeichnet**, dass von der Antriebswelle (4) eines mechanischen Zaehlers (1) eine sekundaere Ausgangswelle (8) abgeleitet ist, die mit einem optischen Impulsgenerator (13, 14, 15, 16, 17) wirkverbunden ist, dass der Ausgang (18) des Impulsgenerators (13, 14, 15, 16, 17) mit einem Interface (19) in Wirkverbindung steht, welches die optischen Impulse in elektrische Impulse umwandelt, dass ein erster Ausgang (20) dieses Interface (19) mit einem Impuls-Konzentrator (21) in Wirkverbindung steht, der ein Anzeigedisplay (22) aufweist und dass ein zweiter Ausgang (23) des Interface (19) mit einer Recheneinheit (24) wirkverbunden ist und die Recheneinheit ein Tastenfeld (25) zur Programmierung des Rechners (24) aufweist und mit einer Druckvorrichtung (26) wirkverbunden ist.

2. Geraet, nach Anspruch 1, **dadurch gekennzeichnet**, dass der Impulsgenerator (13, 14, 15, 16, 17) aus einer drehbaren Scheibe (14) mit in Umfangsrichtung angeordneten Schlitzen oder Ausnehmungen (15) besteht und dass mit dieser Scheibe (14) ein Lichtstrahl, der im Inneren einer Vorrichtung (17) gebildet wird, unterbrechbar bzw. nicht unterbrechbar ist.

3. Geraet, nach Patentanspruch 2, **dadurch gekennzeichnet**, dass die Strahlenimpulse vom Generator (13, 14, 15, 16, 17) an ein Interface (19) ueber optisch leitende Faserkabel (18) uebertragen werden.

4. Geraet, nach Patentanspruch 1, **dadurch gekennzeichnet**, dass der Ausgang (20) des Interface (19), in dem die Umformung der Lichtsignale in elektrische Signale erfolgt, mit einer Konzentrationseinheit (21) fuer die Impulse wirkverbunden ist und dass diese Einheit ein Anzeigedisplay (22) aufweist.

5. Geraet, nach Patentanspruch 1, **dadurch gekennzeichnet**, dass das Interface (19), die Konzentrationseinheit (21) und das Display (22), sowie die Recheneinheit (24) und die Druckvorrichtung (24, 26) als tragbare Geraete ausgefuehrt sind und/oder im Inneren des Fahrerhauses des Tankfahrzeuges angeordnet sind.

FIG. 1

EP 0 359 898 A2

FIG. 2